# EUROPEAN PATENT SPECIFICATION

(11) **EP 4 277 001 B1**
(45) Date of publication and mention of the grant of the patent: **22.04.2026**
(21) Application number: 22876954.3
(22) Date of filing: 30.09.2022
(51) Int. Cl.: H01M 50/358, H01M 50/30, H01M 50/503, H01M 50/516, H01M 50/211, H01M 50/24, H01M 10/658, H01M 10/653

(54) **BATTERY MODULE AND BATTERY PACK COMPRISING SAME**
BATTERIEMODUL UND BATTERIEPACK DAMIT
MODULE DE BATTERIE ET BLOC-BATTERIE LE COMPRENANT

(30) Priority: 01.10.2021 KR 20210131089; 01.10.2021 KR 20210131101; 01.10.2021 KR 20210131124; 29.09.2022 KR 20220124087
(43) Date of publication of application: 15.11.2023
(60) Divisional application: 26162630.3
(73) Proprietor: LG Energy Solution, Ltd., Seoul 07335 (KR)
(72) Inventor: LEE, Sun Jung, Daejeon 34122 (KR); LEE, Tae Kyeong, Daejeon 34122 (KR); LEE, Hyoung Suk, Daejeon 34122 (KR); HONG, Soon Chang, Daejeon 34122 (KR)
(74) Representative: Goddar, Heinz J.
(86) International application number: PCT/KR2022/014784
(87) International publication number: WO 2023/055183

(56) References cited:
- JP-A- 2006 196 230
- KR-A- 20050 107 169
- KR-A- 20150 059 515
- KR-A- 20190 069 873
- KR-A- 20190 069 873
- KR-A- 20200 012 296
- KR-A- 20210 077 498
- US-A1- 2019 097 192
- US-A1- 2021 135 314

## Description

### [Technical Field]

The present invention relates to a battery module.

More particularly, the present invention relates to a battery module configured to be expandable, which has a structure capable of efficiently venting an internal gas.

Further, the present invention relates to a battery pack including a stack of the battery modules.

This application claims the benefit of priority based on Korean Patent Applications Nos. 10-2021-0131101, filed on October 1, 2021, 10-2021-0131124, filed on October 1, 2021, 10-2021-0131089, filed on October 1, 2021, and 10-2022-0124087, filed on September 29, 2022.

### [Background Art]

Recently, secondary batteries that can be charged and discharged have been widely used as energy sources of wireless mobile devices. In addition, the secondary battery has attracted attention as an energy source of an electric vehicle, a hybrid electric vehicle, and the like, which are proposed as a solution for air pollution and the like of existing gasoline vehicles and diesel vehicles using fossil fuel. Accordingly, the types of applications using the secondary battery are diversifying due to the advantages of the secondary battery, and it is expected that the secondary battery will be applied to many fields and products in the future.

In addition, as an energy storage system (ESS) and a power source for an electric vehicle (EV) or the like, there is an increasing demand for a battery module accommodating a plurality of secondary batteries electrically connected in series or in parallel and a battery pack composed of the battery modules.

Such a battery module or battery pack includes an external housing made of a metal material to protect a plurality of secondary batteries from external impacts or receive and store the secondary batteries.

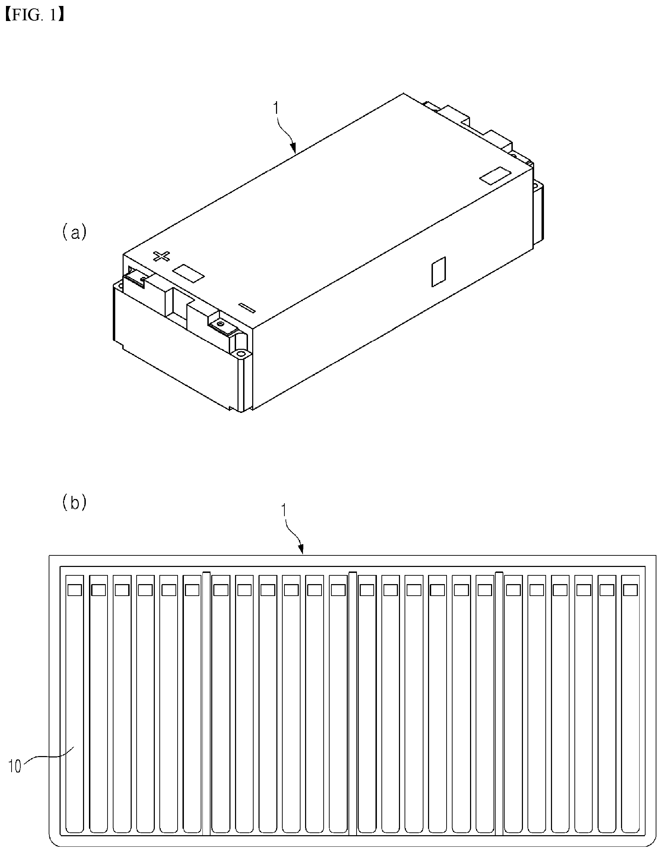

FIG. 1 is a set of a perspective view (FIG. 1A) and a cross-sectional view (FIG. 1B) of a conventional general battery module 1. As shown in the drawing, a battery cell stack in which several tens of battery cells 10 are stacked is accommodated in one module case and sealed. The conventional battery module has the following problems.

First, since a path to safely discharge gas to the outside does not exist in a module unit, when an internal venting phenomenon occurs, an internal temperature of the module rises, resulting in a high risk of fire and explosion.

Second, since about several tens of battery cells are stacked in one module, when ignition occurs in one battery cell, there is a risk that flame easily propagates to other battery cells and the module burns out in a short time.

Third, since single battery cells are stacked only in a thickness direction thereof, space utilization of battery cell arrangement may be reduced and a degree of freedom in design may be reduced, and thus there is a limitation in configuring a battery pack by combining these types of modules. That is, it is not easy to configure the battery module or the battery pack so as to correspond to a limited space such as a vehicle or various types of spaces.

Accordingly, it is desirable to develop a technology related to a battery module capable of efficiently discharging gas inside the module, preventing flame propagation, and increasing a degree of freedom in design.

### [Prior-Art Documents]

[Patent Document] Japanese Patent Laid-Open Publication No. 2017-010778. KR20190069873A also discloses a battery module known in the art.

### [Disclosure]

### [Technical Problem]

The present invention has been devised to solve the above problem, and the present invention is directed to providing an expandable battery module capable of improving space utilization of a battery module and a battery pack by connecting battery cells in a longitudinal direction in addition to a thickness direction.

The present invention is also directed to providing a battery module having a gas venting structure capable of efficiently discharging gas generated inside the expandable module.

The present invention is also directed to providing a battery pack including a stack of the battery modules.

### [Technical Solution]

A battery module according to the present invention for solving the above problems includes a battery cell assembly in which two or more columns of longitudinal unit cells, each of which is composed of two or more battery cells arranged in a line in a longitudinal direction and connected, are stacked in a thickness direction of the battery cell, a hollow center guard disposed at a connection position of end portions of the battery cells, which face each other in the longitudinal direction, in the longitudinal unit cell, and a module case in which the battery cell assembly and the hollow center guard are accommodated, wherein a first venting hole communicating with a hollow of the hollow center guard is provided in a sidewall of the hollow center guard, and a second venting hole communicating with the hollow of the hollow center guard is provided in the module case configured to cover an upper portion of the hollow center guard.

The battery cells of the longitudinal unit cell may be connected by welding electrode leads of the end portions of the battery cells, which face each other in the longitudinal direction.

The electrode lead of the battery cell, which is located at one end portion of both end portions of the battery cell assembly in the longitudinal direction, may be electrically connected to a terminal bus bar, and the electrode lead of the battery cell, which is located at the other end portion, may be electrically connected to an electrode lead of the battery cell of the longitudinal unit cell adjacent in the thickness direction of the battery cell.

The battery cell assembly may have a 1P4S electrical connection structure in which the longitudinal unit cells each having two battery cells connected in the longitudinal direction are stacked in two columns.

One or more thermal insulating plates may be installed between the longitudinal unit cells adjacent to each other in the thickness direction of the battery cell.

The hollow center guard may be disposed between battery cell connection portions, each of which is a portion at which the battery cells are connected in the longitudinal direction, of two longitudinal unit cells adjacent to each other in the thickness direction of the battery cell.

The hollow center guard may have a rod shape extending a predetermined length in a height direction of the battery cell between an upper module case and a lower module case, and the first venting hole may be disposed in each of both sidewalls of a lower side of the center guard.

A portion of the module case, in which the second venting hole is provided, may be concavely recessed downward, and may cover the upper portion of the hollow center guard.

A partition wall extending perpendicular to the longitudinal direction of the battery cell may be disposed in the hollow of the hollow center guard, and the hollow may be divided into two by the partition wall.

A second center guard may be installed on each of both side surfaces of the hollow center guard in the thickness direction of the battery cell, and
the battery cells of the longitudinal unit cell may be connected in the longitudinal direction through the second center guard.

The second center guard may include a through slot or a cut-out slit extending downward from an upper end portion thereof, and the battery cells of the longitudinal unit cell may be connected through the through slot or the cut-out slit.

The battery module may further include end plates configured to cover a front end portion and a rear end portion of the battery cell assembly and coupled to a front end portion and a rear end portion of the module case in the longitudinal direction, respectively.

A third venting hole communicating with the outside may be provided in each of the end plates.

A terminal bus bar may be installed on a front end plate, which covers the front end portion of the battery cell assembly, of the end plates, and the electrode lead of the battery cell provided in the battery cell assembly may be coupled to the terminal bus bar.

Each of the end plates may include a space therein, a third venting hole communicating with the space may be provided in an inner side surface of the end plate, which faces the battery cell assembly, and a fourth venting hole communicating with the inner space and the outside may be provided in a lower surface of the end plate.

A partition wall extending to a portion of a height of the end plate may be installed in the inner space of the end plate, and a gas introduced into the third venting hole may move over the partition wall and may be discharged through the fourth venting hole.

A terminal bus bar may be installed on an outer side surface of a front end plate, which covers the front end portion of the battery cell assembly, of the end plates, a through slot may be provided in a body portion of the front end plate surrounding a space inside the front end plate, and the electrode lead of the battery cell provided in the battery cell assembly may pass through the through slot and may be coupled to the terminal bus bar.

A fixed coupling portion, which is coupled to a battery pack, may protrude from a lower end portion of the end plate.

A thermally conductive resin layer may be disposed in at least one of a space between the module case covering an upper portion of the battery cell assembly and the battery cell assembly, and a space between the battery cell assembly and the module case located below the battery cell assembly.

A battery pack according to another aspect of the present invention includes a battery module stack in which the battery module is stacked in plural in at least one of the longitudinal direction and the thickness direction of the battery cell.

### [Advantageous Effects]

According to the present invention, it is possible to obtain an expandable battery module capable of improving space utilization of a battery module and a battery pack by connecting battery cells in a longitudinal direction in addition to a thickness direction.

Further, gas in the module can be efficiently discharged by a venting structure suitable for the expandable battery module. Accordingly, it is possible to improve safety by preventing temperature rise of the battery module and the occurrence of a fire.

**In** particular, an exhaust gas movement path can be effectively controlled or implemented in a higher level of the battery pack by making a venting gas discharge direction to be the same in a module unit.

### [Brief Description of the Drawings]

FIG. 1 illustrates a perspective view and a cross-sectional view of a conventional general battery module.
FIG. 2 is a set of an exploded perspective view and a coupling perspective view of a battery module according to one embodiment of the present invention.
FIG. 3 is a schematic view illustrating a detailed configuration and the like of a battery cell assembly in the battery module of one embodiment.
FIG. 4 is a schematic view illustrating an electrical connection relationship of the battery cell assembly in the battery module of one embodiment.
FIG. 5 is a perspective view illustrating a coupling relationship between the battery cell assembly and a hollow center guard.
FIG. 6 is a perspective view of the hollow center guard.
FIG. 7 is a perspective view illustrating an example of a coupling relationship between the hollow center guard and a second center guard.
FIG. 8 is a side cross-sectional view illustrating the coupling relationship between the battery cell assembly and the hollow center guard.
FIG. 9 is a perspective view of another example of the hollow center guard.
FIG. 10 is a perspective view of a battery module according to another embodiment of the present invention.
FIG. 11 is a set of a side cross-sectional view, a front perspective view, and a rear perspective view illustrating an example of a front end plate of the battery module according to the present invention.
FIG. 12 is a rear perspective view illustrating an example of a rear end plate of the battery module according to the present invention.
FIG. 13 is a set of a partial cut perspective view and a plan view illustrating a coupling relationship between the front end plate and the battery cell assembly of the battery module according to the present invention.
FIG. 14 is a cross-sectional view of the battery module taken along line A-A' of FIG. 2.
FIG. 15 is a schematic view illustrating an installation position of a thermally conductive resin layer.
FIG. 16 is a schematic view of a battery pack including a battery stack composed of the battery module of the present invention.

### [Detailed Description of the Preferred Embodiments]

Hereinafter, the present invention will be described in detail. Prior to this, terms or words used in the present specification and claims should not be restrictively interpreted as ordinary meanings or dictionary-based meanings, but should be interpreted as meanings and concepts consistent with the technical ideas of the present invention on the basis of the principle that an inventor can properly define the concept of a term to describe and explain his or her invention in the best way.

Throughout this specification, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts, or combinations thereof.

Further, when a portion such as a layer, a film, an area, a plate, or the like is referred to as being "on" another portion, this includes not only the case in which the portion is "directly on" the another portion but also the case in which still another portion is interposed therebetween. In contrast, when a portion such as a layer, a film, an area, a plate, or the like is referred to as being "below" another portion, this includes not only the case in which the portion is "directly below" the another portion but also the case in which still another portion is interposed therebetween. In addition, to be disposed "on" in the specification of the present invention may include the case disposed at the lower portion as well as the upper portion.

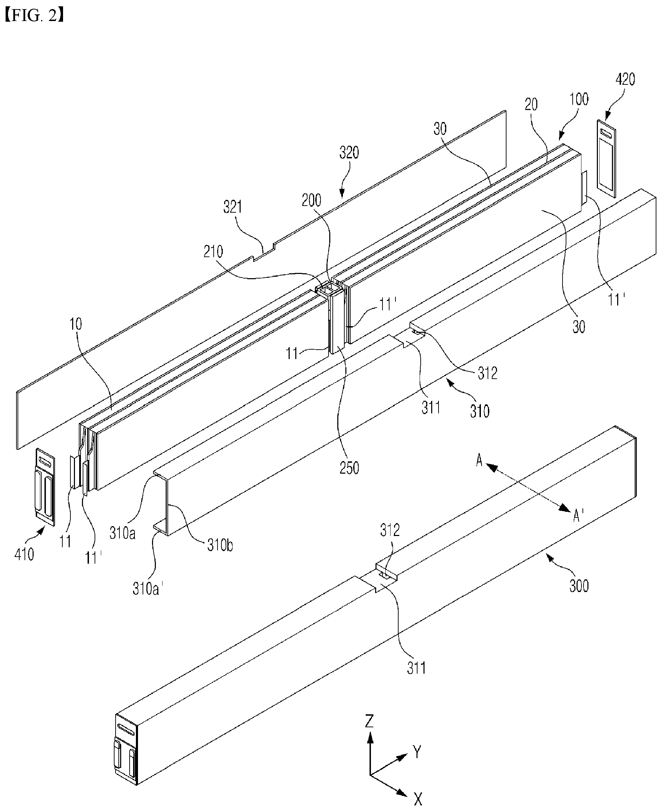

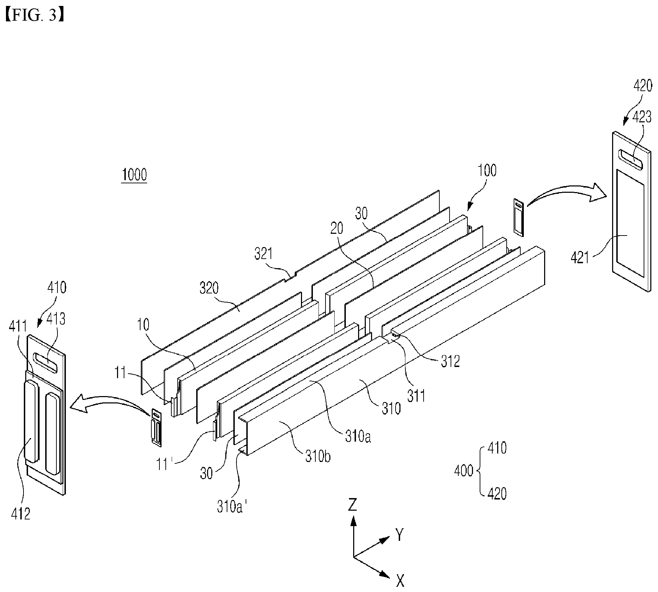

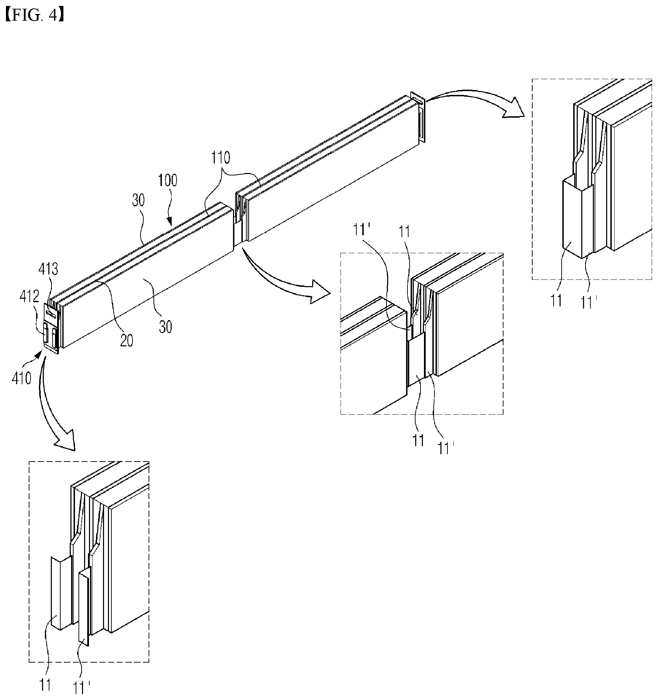

FIG. 2 is a set of an exploded perspective view and a coupling perspective view of a battery module according to one embodiment of the present invention, FIG. 3 is a schematic view illustrating a detailed configuration and the like of a battery cell assembly in the battery module of one embodiment, and FIG. 4 is a schematic view illustrating an electrical connection relationship of the battery cell assembly in the battery module of one embodiment.

As shown in FIGS. 2 to 4, a battery module 1000 of the present invention includes a battery cell assembly 100 including a longitudinal unit cell composed of battery cells connected in a longitudinal direction, a hollow center guard 200 installed between the battery cells, and a module case 300 in which the battery cell assembly 100 and the hollow center guard 200 are accommodated.

The hollow center guard 200 is not shown in FIGS. 3 and 4 to clearly illustrate the coupling between electrode leads 11 and 11' of a longitudinal unit cell 110 constituting the battery cell assembly 100.

As shown in FIG. 2, based on a battery cell 10 having the electrode leads 11 and 11' formed at both ends thereof and extending in the longitudinal direction, a Y direction is the longitudinal direction of the battery cell 10 or the battery module (case), an X direction is a thickness direction (a stacking direction of the battery cell) of the battery cell 10 or the module case 300, and a Z direction is an up and down direction.

The battery cell 10 included in the battery cell assembly 100 of the present invention is a so-called bidirectional battery cell 10 in which the electrode leads 11 and 11' protrude from both ends of the battery cell 10 so that the battery cells 10 are arranged and connected in a line in the longitudinal direction. When the bidirectional battery cells 10 are arranged in a line and the facing electrode leads 11 and 11' of the battery cells are connected to each other by, for example, welding, the battery cells can be directly connected in the longitudinal direction without a separate connection member. Accordingly, according to the present invention, two or more battery cells can be connected in the longitudinal direction. The number of the battery cells 10 connected in the longitudinal direction is not limited in principle as long as a space of the battery pack, in which the battery module case 300 or the battery module 1000 is installed, is allowed. However, approximately two to four battery cells 10 may be connected in the longitudinal direction since the space of the battery module 1000 or battery pack that can be actually installed in a vehicle is limited. In addition, the number of the battery cells 10 connected in the longitudinal direction may be changed according to the size (length) of the battery cell 10 to be connected. In the present specification, the battery cells 10 formed by arranging two or more battery cells 10, each of which has the electrode leads 11 and 11' formed at both ends in the longitudinal direction, in a line to face each other and connecting the facing electrode leads 11 and 11' of the battery cells are referred to as the longitudinal unit cell 110.

The battery cell assembly 100 included in the battery module 1000 of the present invention is formed by stacking the longitudinal unit cells 110 in two or more columns in the thickness direction (X direction) of the battery cell 10. The number of columns in which the longitudinal unit cells 110 are stacked also depends on the allowable space of the battery module 1000 and the battery pack, the size of the battery cell 10, and the like. In addition, the number of the battery cells 10 in the longitudinal direction, the number of columns, and the like may be determined in consideration of the required capacity of an electric device. As described above, according to the present invention, the number of the battery cell assemblies 100, which are accommodated in the module case 300, in the longitudinal direction and the number of columns may be adjusted, and thus a degree of freedom in design is improved. In addition, when about two to four battery cell assemblies 100 are stacked in the longitudinal direction and the resultant stacks are stacked in about two to four columns in the thickness direction of the battery cell instead of stacking several tens of battery cell assemblies 100 as in the related art, the battery cell assemblies 100 can be configured in a compact manner. In addition, when the battery cell assembly 100 composed of a small number of the battery cells 10 is accommodated in a separate module case 300, and the battery module 1000 including the module case 300 is stacked in the longitudinal direction or the thickness direction of the battery cell 10 like Lego blocks, the battery pack may be freely configured in consideration of a space in which the battery module 1000 is installed or an installation space of the battery pack. For example, when each unit module of the battery module 1000 is stacked in the longitudinal direction, even when the battery cells of the longitudinal unit cell 110 are not connected longer in the longitudinal direction, the same effect can be achieved. Accordingly, an individual battery unit module can be configured in a compact manner. In addition, the degree of freedom in design may be improved by stacking the battery module 1000 in the thickness direction as many as the required number. With the structure in which several tens of battery cells are stacked in one module case as shown in FIG. 1, it is difficult to configure the battery pack as desired. That is, since the minimum units of the battery cells included in the battery module constituting the battery pack are different, the degree of freedom in design of the conventional battery module 1 is inevitably reduced.

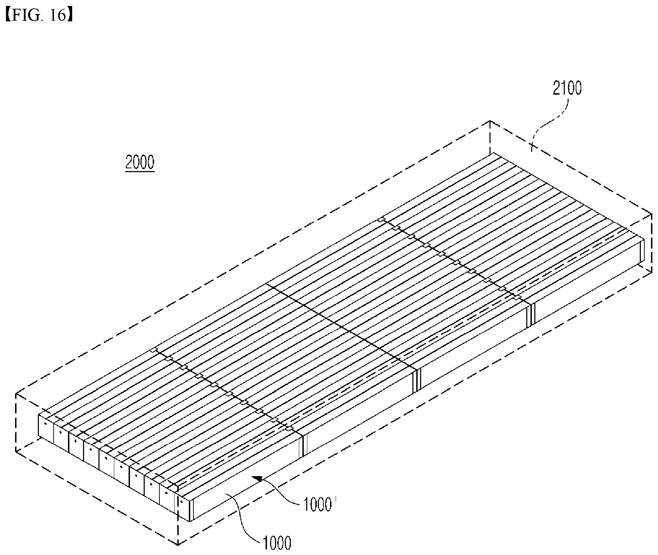

In addition, for example, when ignition occurs in some battery cells 10 included in the battery module, in the battery module 1 of FIG. 1, flame easily propagates to the adjacent battery cells 10. However, in the structure of the battery module 1000 of FIG. 2 or a battery pack disclosed in FIG. 16, which will be described below, since a small number of the battery cell assemblies 100 are separately accommodated in the battery module 1000, even when ignition occurs in the battery cells 10 in one battery module 1000, the ignition is difficult to propagate to other battery modules 1000.

As described above, the battery cell assembly 100 of the present invention has the form in which the battery cell assembly 100 composed of a specific number of the battery cells 10 connected in the longitudinal direction and the thickness direction of the battery cell is accommodated in each module case. Accordingly, various types of battery packs may be manufactured according to a stacking (design) method of the battery module 1000 including the battery cell assembly 100, and thus the battery module 1000 of the present invention can be referred to as an expandable module. In particular, the battery cell assembly 100 of the present embodiment is composed of a total of four battery cells 10 by connecting two battery cells 10 in the longitudinal direction and stacking the longitudinal unit cells 110 in two columns.

For simplicity of illustration, the hollow center guard installed between the battery cells connected in the longitudinal direction is not illustrated in FIGS. 3 and 4. An electrical connection relationship of the battery cell assembly 100 is well shown in FIG. 4.

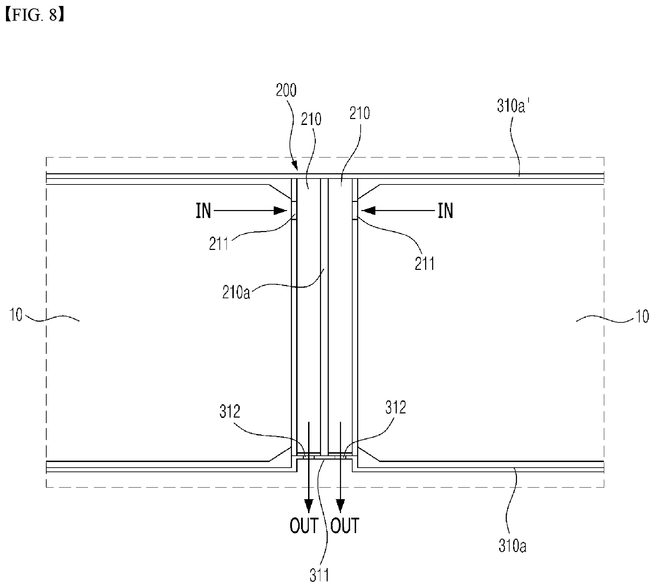

Referring to FIG. 4, two battery cells 10 are connected in the longitudinal direction to form the longitudinal unit cell 110, and the longitudinal unit cells 110 are stacked in two columns in the thickness direction of the battery cell. The facing electrode leads 11 and 11' of the battery cells 10 connected in the longitudinal direction are connected, for example, by welding. Accordingly, the longitudinal unit cell 110 may be easily formed by electrically connecting the battery cells 10 even without a separate connection member, such as a bus bar. A thermal insulating plate 20 may be installed between the longitudinal unit cells 110. It is possible to prevent excessive heat from being transmitted between the longitudinal unit cells 110, which are stacked in the thickness direction, by the thermal insulating plate 20. Those obtained by bonding glass fiber reinforced plastic (GFRP) pads 21 and 23 to both sides of a silicone pad 22 may be used as the thermal insulating plate 20 (see FIG. 8). As necessary, an electric insulating sheet 30 may be installed between the battery cell assembly 100 and the module case 300 surrounding the battery cell assembly 100. The configuration of the thermal insulating plate 20 and the electric insulating sheet 30 is well shown in a cross-sectional view of FIG. 8.

Referring to FIG. 4 again, the electrical connection structure of the battery cell assembly 100 will be described again. The electrode leads 11 and 11' of the battery cells, which have different polarities and face each other in the longitudinal direction, are welded and connected to each other in the middle of the battery cell assembly 100. In addition, in the longitudinal unit cells 110, which are adjacent to each other in the thickness direction of the battery cell, in a rear end of the battery cell assembly 100, the electrode leads 11 and 11' of the battery cells 10 which have different polarities are electrically connected to each other. Specifically, when the electrode leads 11 and 11' of the adjacent battery cells 10, which have different polarities, are bent toward each other and the bent portions are weld-coupled, two columns of the longitudinal unit cells 110 may be electrically connected in series. Meanwhile, the electrode leads 11 and 11' of the battery cells 10 of the longitudinal unit cells 110 in a front end of the battery cell assembly 100 are bent outward without being connected to each other. These electrode leads 11 and 11' may be connected to a terminal bus bar 412 of a front end plate 410, as will be described below. The battery cell assembly 100 shown in FIG. 4 has a so-called a 1P4S electrical connection structure in which four battery cells 10 are connected in series. However, the electrical connection structure of the battery cell assembly 100 of the present invention is not limited thereto and may have other types of structures. For example, the overall electrical connection structure of the battery cell assembly 100 may be changed by varying the polarities of the leads of the battery cells included in the longitudinal unit cell 110 or varying the number of the battery cells 10 in the longitudinal direction and in the thickness direction.

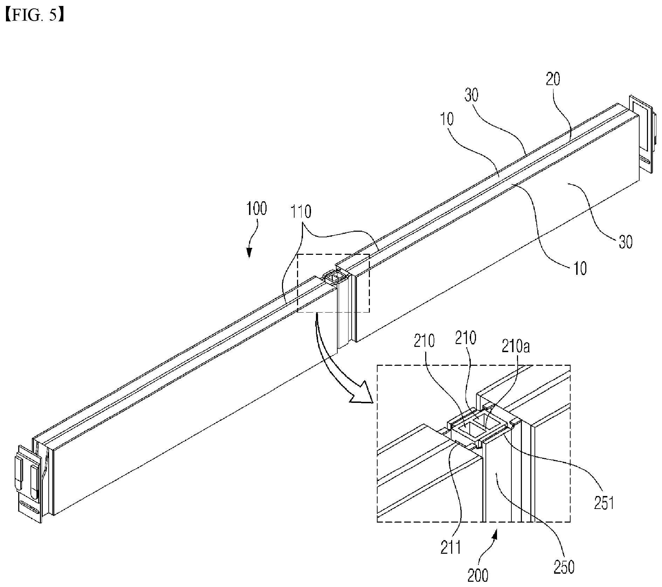

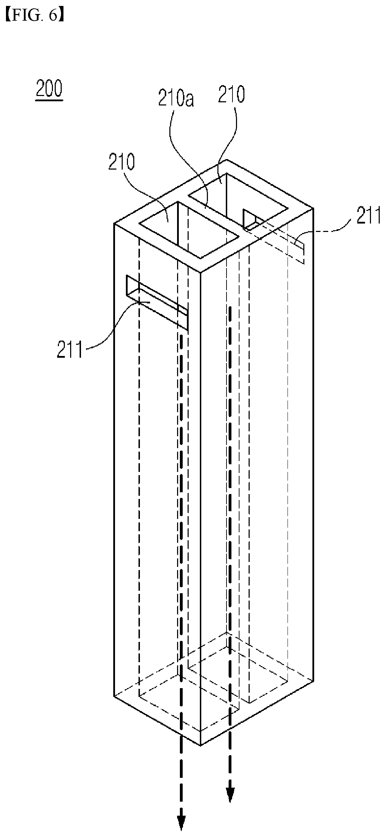

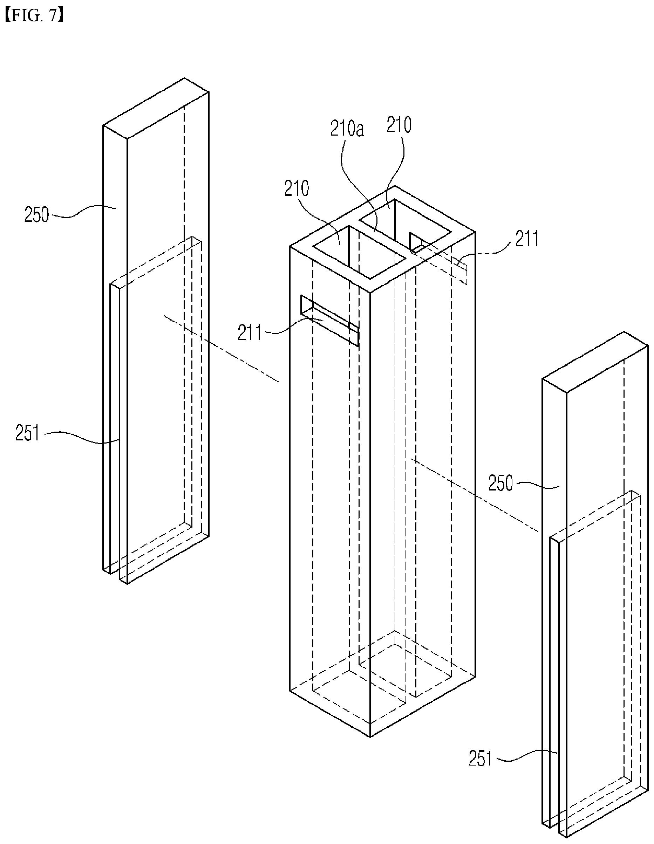

FIG. 5 is a perspective view illustrating a coupling relationship between the battery cell assembly and the hollow center guard, FIG. 6 is a perspective view of the hollow center guard, FIG. 7 is a perspective view illustrating an example of a coupling relationship between the hollow center guard and a second center guard, and FIG. 8 is a side cross-sectional view illustrating the coupling relationship between the battery cell assembly and the hollow center guard.

In FIGS. 5 and 8, positions of upper and lower portions of each of the battery module and the battery cell assembly are opposite to those of the battery module of FIG. 2. That is, in FIG. 8, the case in which the battery module is turned upside down so that an upper case is located below and a lower case is located above is shown. In order to aid better understanding, the battery module is turned upside down and shown in FIGS. 5 and 8 to coincide with the arrangement of the hollow center guard shown in FIGS. 6 and 7.

Referring to FIGS. 5 to 8, in the longitudinal unit cell 110, the hollow center guard 200 is disposed at a connection position of end portions of the battery cells, which face each other in the longitudinal direction. In the battery cell assembly 100 according to the present invention, the battery cells are connected in the longitudinal direction, and thus, for example, when ignition occurs in the battery cell 10 disposed at the front end of the battery cell assembly 100 in the longitudinal direction, flame may propagate to the battery cell 10 at the rear end of the battery cell assembly 100 in the longitudinal direction connected thereto. The hollow center guard 200 may block such flame propagation in the longitudinal direction.

Specifically, the hollow center guard 200 is located adjacent to a portion to which the electrode leads 11 and 11' of the end portions of the battery cells, which face each other in the longitudinal direction, are coupled. That is, in this portion, a lot of heat is generated, and a lot of gas is also generated due to a battery reaction. Accordingly, the hollow center guard 200 is installed in the module case at the position at which the end portions of the battery cells facing each other in the longitudinal direction are connected to each other.

In FIG. 5, two longitudinal unit cells 110 are stacked in the thickness direction of the battery cell. In this case, the hollow center guard 200 may be disposed between battery cell connection portions (electrode lead bonding portions) in the longitudinal direction of two longitudinal unit cells 110 adjacent to each other in the thickness direction of the battery cell. That is, the hollow center guard 200 is located between the battery cell connection portion of one longitudinal unit cell 110 in the longitudinal direction and the battery cell connection portion of another longitudinal unit cell 110 in the longitudinal direction, which is adjacent to the one longitudinal unit cell 110 in the thickness direction of the battery cell.

The hollow center guard 200 also performs a function of a venting passage for discharging gas and heat to the outside in addition to the flame propagation blocking function. To this end, the hollow center guard 200 has a hollow 210 therein.

As shown in FIGS. 5 to 8, the hollow center guard 200 may have a rod shape extending a predetermined length in a height direction of the battery cell between upper and lower module cases. Accordingly, the hollow 210 also extends in the height direction of the battery cell. A length of the venting passage in the height direction of the battery cell is determined according to a length of the hollow center guard 200. The length of the hollow center guard 200 may be substantially equal to or slightly less than a height of the battery cell so that the gas generated from the battery cell can be easily vented.

A first venting hole 211 connected to the hollow 210 in the hollow center guard 200 is provided in a sidewall of the hollow center guard 200. Accordingly, as shown in FIG. 6, gas generated from the battery cells 10 at the front and rear ends of the longitudinal unit cell 110 may be introduced into the hollow 210 through the first venting hole 211 and may move through the hollow 210.

The first venting holes 211 may be provided in both sidewalls of the hollow center guard 200 so that all the gas generated from the left and right battery cells 10 in the longitudinal direction can be discharged.

As shown in FIGS. 2 and 8, the module case 300 of the battery module 1000 according to the present invention covers an upper portion of the hollow center guard 200. A second venting hole 312 communicating with the hollow 210 of the hollow center guard 200 is provided in the module case 300 (in an upper case 310a of the module case covering the battery cell assembly 100 at a central portion of the battery cell assembly 100 in the longitudinal direction) covering the upper portion of the hollow center guard 200.

The first venting holes 211 may be disposed in both sidewalls of a lower side of the hollow center guard 200 in order to form a venting passage vertically passing through the battery module. That is, the second venting hole 312 is located in an upper portion of the module, and the first venting hole 211 of the hollow center guard 200 is located in a lower portion of the module. Accordingly, according to the present embodiment, a venting passage along the first venting hole 211 - the hollow 210 of the hollow center guard 200 - the second venting hole 312 is formed so that gas can be easily discharged to the outside of the module along the venting passage.

A portion 311 of the module case, in which the second venting hole 312 is formed, may be formed as a recessed portion 311 concavely recessed downward, as shown in FIGS. 2 and 8. With such a structure, when the battery module 1000 is stacked and accommodated in a battery pack, a separate venting pipe is easily installed in the recessed portion 311 or a separate venting passage is easily connected to the recessed portion 311. In addition, for example, when the expandable battery modules 1000 of the present invention are stacked in the thickness direction of the battery cell, a bar-shaped venting pipe crossing the recessed portion 311 is installed to efficiently perform gas venting. That is, when the battery modules 1000 are stacked in the form as shown, for example, in FIG. 16, to configure a battery pack, which is a higher-level unit, venting gas can be discharged in the same direction, so that an exhaust gas movement path may be effectively controlled in the battery pack, which is a higher-level unit of the battery module.

Further, as shown in FIGS. 5 and 6, a partition wall 210a extending perpendicular to the longitudinal direction of the battery cell 10 may be formed in the hollow 210 of the hollow center guard 200 to separate the hollow 210 into two hollows. In addition, the first venting hole 211 may be formed in each of left and right-sidewalls of the two hollows so that the gas generated from the battery cells 10 can be discharged through the two hollows 210. As shown in FIG. 6, when the hollow of the center guard 200 is divided into two hollows by the partition wall 210a, the second venting hole 312 may also be formed as two holes correspondingly. Referring to FIG. 8, it can be seen that two second venting holes 312 are formed in the upper case 310a of the module case in a lower side of the hollow.

Meanwhile, in addition to the center guard 200, second center guards 250 may be installed on both side surfaces of the center guard. For example, as shown in FIG. 7, the second center guards 250 may be installed at both sides of the center guard 200 in the thickness direction of the battery cell 10. Like the hollow center guard 200, the second center guard 250 may also serve to prevent flame from propagating toward front and rear ends in the longitudinal direction. That is, by positioning the hollow center guard 200 and the second center guards 250 at the position of the battery cell connection portion at the center of the longitudinal unit cell, it is possible to efficiently prevent flame from propagating between the battery cells at the front and rear ends of the longitudinal unit cell.

In this case, the battery cells of the longitudinal unit cell 110 can be connected in the longitudinal direction through the second center guards 250. That is, the electrode leads 11 and 11' of the battery cells 10, which face in the longitudinal direction, may be coupled to each other through the second center guards 250. To this end, the second center guard 250 may include a through slot (not shown) through which the electrode lead can pass. Alternatively, a cut-out slit 251 extending downward from one end portion (e.g., an upper end portion) of the second center guard 250 may be provided. A coupling portion of each of the electrode leads 11 and 11' may be inserted into the cut-out slit 251 and supported.

As described above, according to the present embodiment, the gas and heat inside the battery module 1000 can be discharged through the first venting hole 211, the hollow 210 of the hollow center guard 200, and the second venting holes 312, and at the same time, flame propagation between the battery cells may be prevented by the hollow center guard 200 and the second center guard 250, thereby further improving the safety of the battery module 1000.

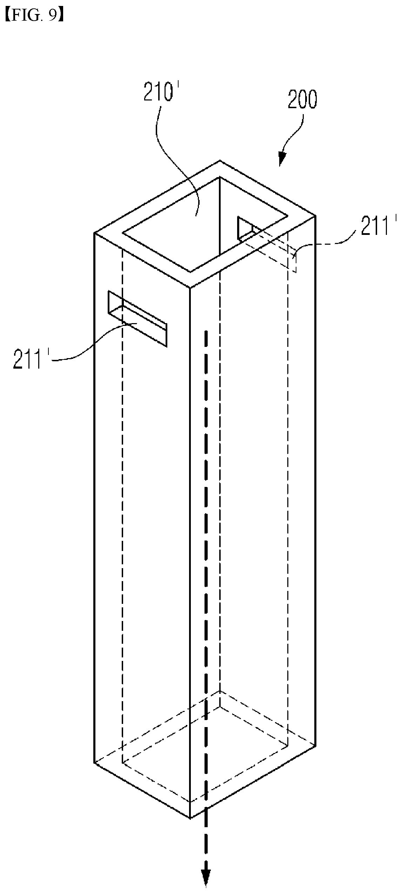

FIG. 9 is a perspective view of another example of the hollow center guard 200.

The hollow center guard 200 of FIG. 9 has no partition wall 210a for partitioning the hollow, and thus has one hollow 210'. In this case, since the hollow 210' increases in volume by as much as the volume of the partition wall 210a, a larger amount of gas can be easily discharged through the hollow 210'.

Although the center guard 200 has one hollow 210', first venting holes 211' are formed in pairs in left and right-sidewalls of the center guard 200. Gas generated from the battery cells 10 disposed at the front and rear ends of the battery cell assembly 100 may be introduced into the hollow 210' through the first venting holes 211'. As described above, the gas is easily discharged to the outside through the second venting hole 312 formed in an upper portion of the module case 300.

In addition, in the present invention, the module case 300 in which the battery cell assembly 100 is accommodated is included. A characteristic point of the present invention is that the second venting hole 312 communicating with the first venting hole 211(211') of the center guard 200 and connected to the outside is formed in the module case 300.

In the present invention, the module case 300 in which the battery cell assembly 100 and the hollow center guard 200 are accommodated is included. Since the battery cell assembly 100 has a structure in which the battery cell assembly 100 extends in the longitudinal direction of the battery cell and is stacked in the thickness direction of the battery cell, the module case 300 also has a shape extending long in the longitudinal direction to correspond thereto. Referring to FIGS. 2 and 3, the module case 300 may be configured with left and right cases 320 and 310 surrounding the battery cell assembly 100 from both sides and coupled, but the present invention is not limited thereto. For example, the module case 300 may be configured with a U-shaped case surrounding a lower portion and both side surfaces of the battery cell assembly 100 and an upper case covering an upper portion of the U-shaped case. In this case, the recessed portion 311 and the second venting hole 312 may be formed in the upper case. In the present embodiment, a right case 310 is formed in a C-shape. The battery cell assembly 100 may be seated in a space of the C-shaped right case 310. Accordingly, the right case 310 accommodates the battery cell assembly 100 while surrounding one side portion and upper and lower portions of the battery cell assembly 100. The right case 310 may be formed by welding an upper case 310a, a lower case 310a', and a side plate case 310b, and may also be formed by bending one plate in a C-shape. As described above, in the module case 300 of the present invention, the second venting hole 312 communicating with the hollow of the hollow center guard 200 and connected to the outside is formed in the portion of the module case covering the upper portion of the center guard 200. As shown in FIG. 2, the recessed portion 311 is formed in an upper center portion of the upper case 310a of the C-shaped right case 310, and the second venting hole 312 is formed in the recessed portion 311. The coupling of the left and right cases is not particularly limited as long as it has a structure in which the battery cell assembly 100 can be firmly seated and firmly coupled, such as welding, adhesive application, or a hooking structure. In addition, a recessed portion 321 having a shape corresponding to that of the recessed portion 311 of the upper case 310a of the right case 310 is formed in an upper center portion of the left case 320 shown in FIGS. 2 and 3.

Referring to FIGS. 2 to 5, the battery module 1000 of the present invention may further include an end plate 400 coupled to each of a front end portion and a rear end portion of the module case 300 in the longitudinal direction.

As shown in the above-described drawings, the end plate 400 includes the front end plate 410 and a rear end plate 420 which are respectively coupled to the front end portion and the rear end portion of the module case 300. The end plates 410 and 420 serve to close front and rear ends of the module case 300. That is, the end plate 400 covers each of a front end portion and a rear end portion of the battery cell assembly 100 accommodated in the module case, and is coupled to each of the front and rear end portions of the module case.

Meanwhile, in the battery module 1000 according to one embodiment of the present invention, venting holes (third venting holes 413 and 423) communicating with the outside are provided even in the end plates 400.

The end plates, that is, the front end plate 410 and the rear end plate 420, are respectively adjacent to the electrode leads 11 and 11' of the battery cell assembly 100, and thus the end plates may include electric insulating sheets 411 and 421 for electrical insulation, respectively. That is, as shown in FIG. 3, the electric insulating sheet 421 is attached to an inner surface of the rear end plate 420 coupled to the rear end portion of the module case. A mica sheet having good heat resistance may be used as the electric insulating sheet 421.

In addition, the electric insulating sheet 421 is attached to an outer surface (front surface) of the front end plate 410, which is coupled to the front end portion of the module case 300, among the end plates. The front end plate 410 includes the terminal bus bar 412. Referring to FIG. 2, the terminal bus bar 412 is installed on the front surface of the front end plate 410. The electrode leads 11 and 11' of the battery cells 10 provided at the front end of the battery cell assembly 100 are coupled to the terminal bus bar 412.

Since insulation of the terminal bus bar 412 is important, the electric insulating sheet 411 is attached to the outer side surface of the front end plate. A through hole (not shown) through which the terminal bus bar 412 is exposed is located in an inner side surface of the front end plate 410 facing the module case 300, and the electrode leads 11 and 11' in the front end of the battery cell assembly 100 may be electrically connected to the terminal bus bar 412 through the through hole. Alternatively, the electrode leads 11 and 11' in the front end of the battery cell assembly 100 may be bent and brought into contact with the terminal bus bar 412 attached to the outer side surface of the front end plate, thereby electrically connecting the electrode leads 11 and 11' to the terminal bus bar 412. As described above, the terminal bus bar and the battery cell assembly 100 may be electrically connected by various methods, and a specific electrical connection form is not limited.

As clearly shown in FIGS. 2 to 5, the third venting holes 413 and 423 communicating with the outside are respectively formed in the front end plate 410 and the rear end plate 420 of the present invention. Accordingly, gas generated in an inner side of each of the front and rear end portions of the module case 300 can be efficiently vented to the outside. Accordingly, in a central portion of the battery module 1000 of the present invention, gas can be discharged through the first venting hole 211, the hollow 210 of the hollow center guard 200, and the second venting hole 312 formed in the upper portion of the module case 300, which are described above, and in front and rear end portions of the battery module 1000, gas can be discharged through the third venting holes 413 and 423 of the front and rear end plates. Accordingly, since the gas can be discharged through three points of the battery module 1000 of the present invention in the longitudinal direction, an increase in internal temperature or an occurrence of a fire can be prevented more efficiently.

Meanwhile, when a case in which battery modules are installed in a battery pack is assumed, a venting hole or a venting channel communicating with the third venting holes 413 and 423 may be formed in a battery pack case. Accordingly, the gas discharged through the third venting holes 413 and 423 can be efficiently discharged to the outside of the battery pack through the venting hole or the venting channel formed in the battery pack case.

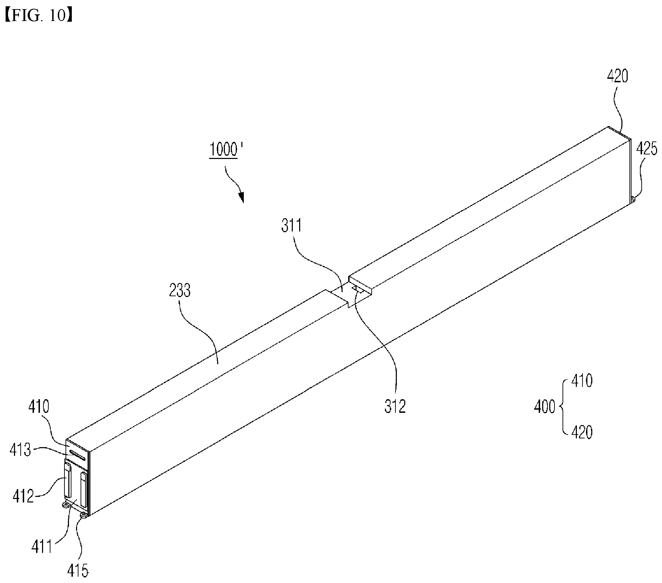

FIG. 10 is a perspective view of a battery module according to another embodiment of the present invention.

In the battery module of the present embodiment, fixed coupling portions 415 and 425 end-coupled with a battery pack protrude from a lower end portion of the end plate 400.

Specifically, the fixed coupling portion 415 is formed to protrude from a lower end of the outer side surface of the front end plate 410 so as to be coupled to the battery pack by a coupling member (not shown). In addition, the fixed coupling portion 425 is formed to protrude from a lower end of an outer side surface of the rear end plate 420 so as to be coupled to the battery pack by a coupling member.

A coupling hole through which the coupling member may be installed may be formed in each of the fixed coupling portions 415 and 425.

The battery cell assembly 100 is installed in the module case 300, and the front end plate 410 and the rear end plate 420 are respectively coupled to the front end portion and the rear end portion of the module case 300. In addition, the battery module 1000 of the present invention can be easily fastened to the battery pack by fastening the coupling holes of the fixed coupling portions 415 and 425 in the front end plate 410 and the rear end plate 420 and coupling members such as bolts at a bottom portion of the battery pack.

In the present embodiment, each of the fixed coupling portions 415 and 425 is formed to protrude from the lower end of the outer side surface of the end plate 400. However, as a modified example, the fixed coupling portion may also be formed on an upper end of the outer side surface of the end plate 400, and the fixed coupling portion may also be formed to protrude from each of the upper end and the lower end of the outer side surface of the end plate 400, but the present invention is not limited thereto. When the fixed coupling portion is formed on the upper end of the end plate, the upper case and the fixed coupling portion of the battery pack can be coupled by the coupling member.

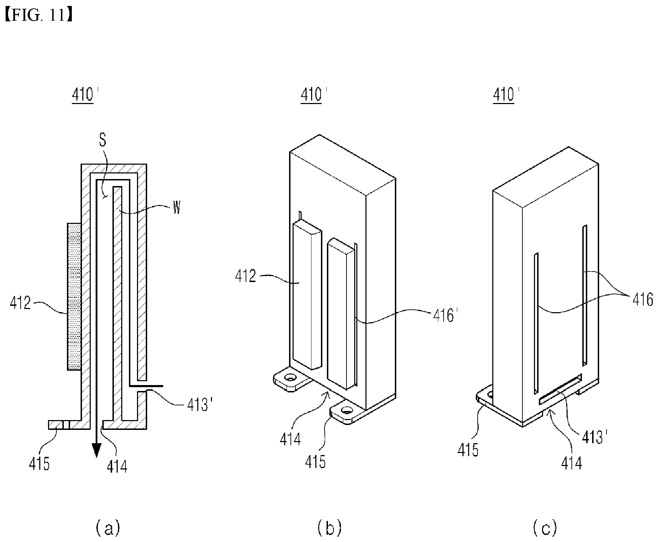

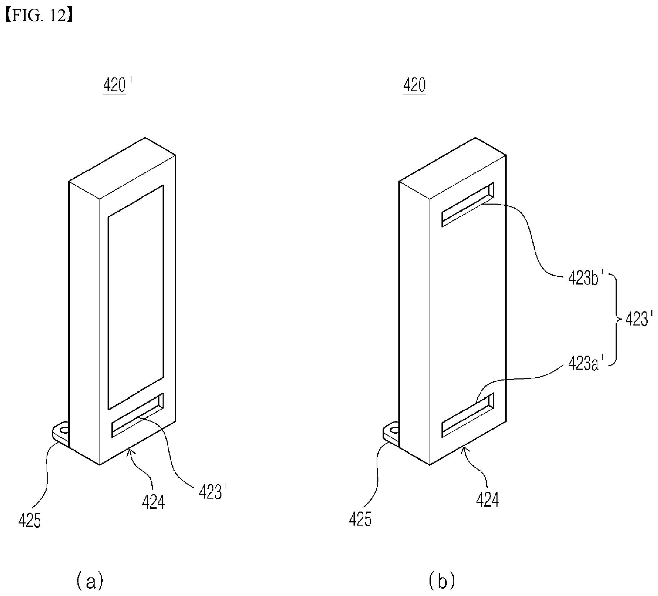

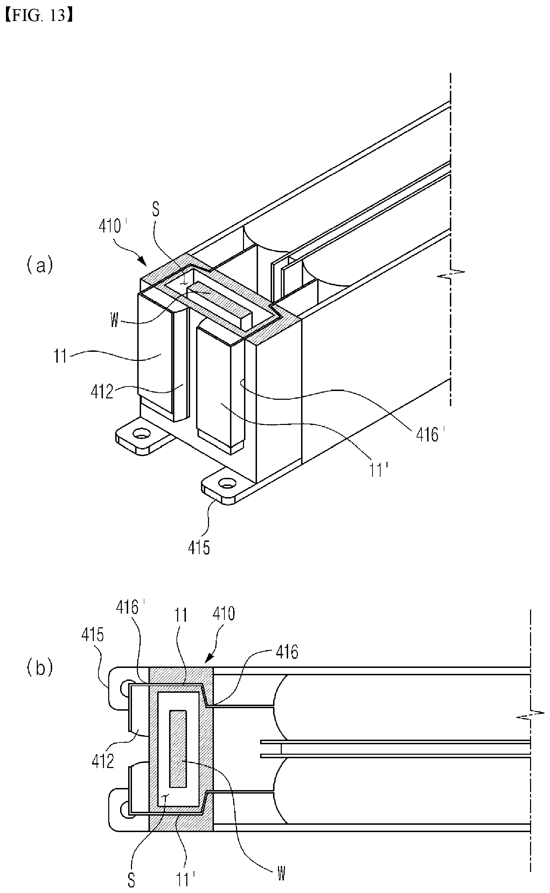

FIG. 11 is a set of a side cross-sectional view ((a) of FIG. 11), a front perspective view ((b) of FIG. 11), and a rear perspective view ((c) of FIG. 11) illustrating an example of a front end plate of the battery module according to the present invention, FIG. 12 is a rear perspective view illustrating an example of a rear end plate of the battery module according to the present invention, and FIG. 13 is a set of a partial cut perspective view and a plan view illustrating a coupling relationship between the front end plate and the battery cell assembly of the battery module according to the present invention.

The end plates in FIGS. 11 and 12 have a venting structure different from that of the end plates shown in FIGS. 2 and 3. The venting structure in FIGS. 2 and 3 is a structure in which the third venting hole 413 is formed to pass through the front end plate 410 and the third venting hole 423 is formed to pass through the rear end plate 420, such that the third venting holes 413 and 423 directly communicate with the outside to allow gas to be discharged therethrough.

The venting structure in FIGS. 11 and 12 is a structure in which the end plate has a space therein and gas is discharged through the space. That is, an inner space S is provided in each of the end plates of the present embodiment, third venting holes 413' and 423' communicating with the spaces S are respectively provided in inner side surfaces of the end plates, which face the battery cell assembly, and fourth venting holes 414 and 424 communicating with the inner spaces S and the outside are respectively provided in lower surfaces of the end plates.

In the present embodiment, the gas generated in the module is introduced into the end plate through each of the third venting holes 413' and 423', flows in the inner space S in the end plate, and then is discharged to the outside through each of the fourth venting holes 414 and 424. Accordingly, in the present embodiment, a gas venting path is longer than that of the end plate of FIGS. 2 and 3. When the gas venting path is long, while high-temperature and high-pressure venting gas is moving, the temperature and pressure of the venting gas are reduced, and thus, a risk may be reduced when the gas is discharged to the outside. In addition, incompletely combusted gas may be completely combusted and stabilized while moving along the long gas venting path. In the present embodiment, the fourth venting holes 414 and 424 are provided in the lower surfaces of the end plates in order to extend the gas venting path.

In addition, in the present embodiment, as a modified example, a partition wall W extending to a portion of a height of the end plate is installed in the inner space S of the end plate. Since the partition wall W extends only to a portion of the height of the end plate, the inner space S is not completely blocked. That is, a path through which gas can move is formed between an upper end of the partition wall W and an upper portion of the end plate. Thus, the gas can move through the path while moving over the partition wall W. According to the present embodiment, the gas introduced through the third venting holes 413' and 423' moves over the partition wall W and is discharged through the fourth venting holes 414 and 424. The gas venting path in the end plate is further increased due to the partition wall W. Accordingly, a state of the gas discharged to the outside is more stabilized, and thus the safety can be further improved.

Referring to a side view of (a) of FIG. 11, a gas venting path of a front end plate 410' having an inner space S therein is well shown. As shown in the drawing, gas flows into the inner space S through the third venting hole 413' provided in the inner side surface of the front end plate 410', and moves upward through the path formed between the partition wall W and the front end plate 410'. The upwardly-moved gas flows downward again while moving over the partition wall W and is discharged to the outside through the fourth venting hole 414 provided in the lower surface of the front end plate 410'.

In order to make the gas venting path longer in consideration of the gas venting path formed over the partition wall, the third venting hole 413' may be disposed in a lower side of the inner side surface of the front end plate 410' adjacent to the fourth venting hole 414.

When a case in which battery modules are installed in a battery pack is assumed, a venting hole or a venting channel communicating with the fourth venting hole 414 may be formed in a battery pack case. Accordingly, the gas discharged through the fourth venting hole 414 can be efficiently discharged to the outside of the battery pack through the venting hole or the venting channel formed in the battery pack case.

FIG. 12 illustrates a rear end plate 420' having an inner space S therein. (a) of FIG. 12 illustrates that the third venting hole 423' is disposed in a lower side of the rear end plate 420', and (b) of FIG. 12 illustrates that third venting holes 423b' and 423a' are disposed in an upper side and the lower side of the rear end plate 420', respectively. As described above, each of the third venting holes 413' and 423' may be formed in plural in the inner side surface of the front end plate 410' or the rear end plate 420'. When the number of third venting holes increases, more gas can be quickly discharged to the outside.

Referring to FIG. 11 again, the terminal bus bar 412 is installed on an outer side surface of the front end plate 410'. In this embodiment, the front end plate 410' has a predetermined thickness and has the inner space S therein. Accordingly, a rear surface of the terminal bus bar 412 is not exposed toward the electrode leads 11 and 11' of the battery cell assembly. In the present embodiment, through slots 416 are provided in a body portion of the front end plate surrounding the space inside the front end plate, and the electrode leads 11 and 11' of the battery cells provided in the battery cell assembly 100 pass through the through slots 416 to be coupled to the terminal bus bar. A reference numeral "416" of (c) of FIG. 11C represents the through slot formed in the front end plate 410'. A reference numeral "416'" of (b) of FIG. 11 represents an outlet of the through slot. As shown in FIG. 11, the through slots are formed in both sides of the body portion of the front end plate 410' in a width direction. The electrode leads 11 and 11' of the battery cell assembly 100, which have different polarities, protrude from the outer side surface of the front end plate 410' respectively through the through slots 416 formed at both sides. End portions of the protruding electrode leads 11 and 11' are bent toward the terminal bus bar 412 and welded to the terminal bus bar 412.

A coupling relationship between the electrode leads 11 and 11' and the terminal bus bar 412 is well shown in FIG. 13. In FIG. 13, the front end plate 410' of FIG. 11 is illustrated after cutting and removing a portion of the front end plate 410' at an intermediate height.

The electrode leads 11 and 11' of the end portions of the battery cells located at the front end portion of the battery cell assembly 100 protrude toward the outer side surface of the front end plate 410' through the through slots 416 provided at both sides of the body portion of the front end plate 410' in the width direction. Meanwhile, the through slots 416 are formed in the body portion (that is, a stretcher portion of a body of the front end plate) of the front end plate 410' surrounding the inner space of the front end plate 410'. Accordingly, the through slots 416 are not in communication with the inner space S (see FIG. 13). The electrode leads 11 and 11' inserted into the through slots 416 are also located to be spaced apart from the inner space S. Accordingly, even when high-temperature and high-pressure gas flows in the inner space S, the electrode leads 11 and 11' are not affected by the gas, and thus the electrical connection path of the battery module 1000 can be stably maintained without being broken.

As described above, the gas venting paths at the front and rear end portions of the battery module of the present invention are formed longer due to the end plates of FIGS. 11 to 13, so that gas discharge safety during thermal runaway can be greatly improved.

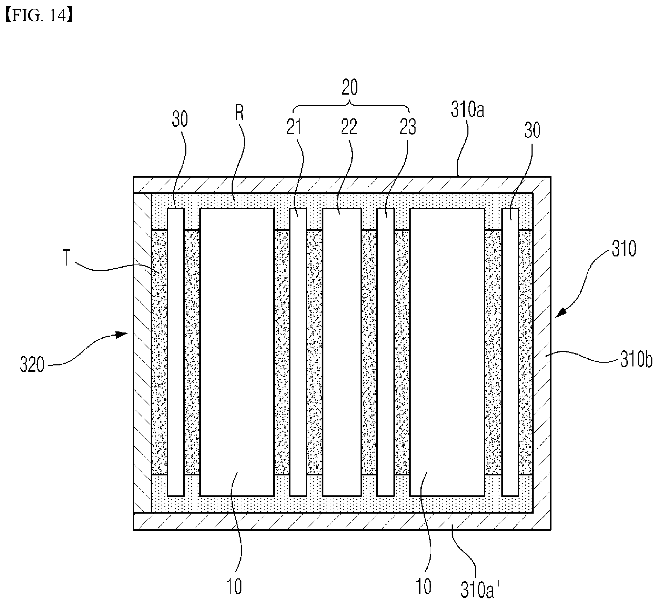

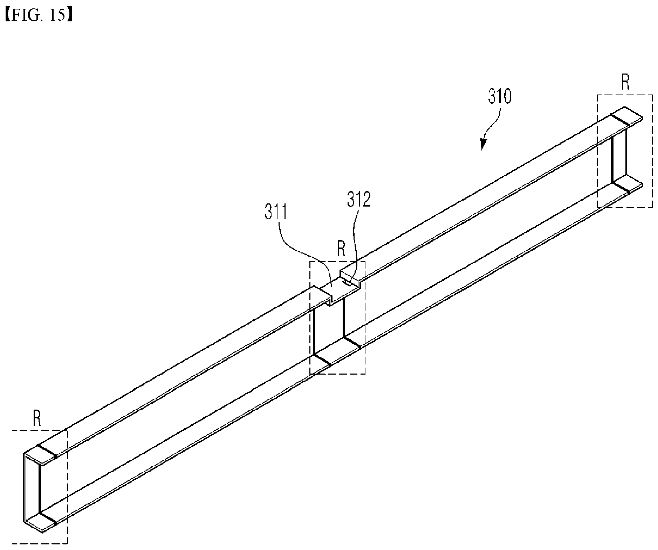

FIG. 14 is a cross-sectional view of the battery module taken along line A-A' of FIG. 2, and FIG. 15 is a schematic view illustrating an installation position of a thermally conductive resin layer.

As shown in FIG. 14, the longitudinal unit cells 110 constituting the battery cell assembly 100 may be adhered by an adhesive T. As described above, the thermal insulating plate 20 may be installed between the longitudinal unit cells 110, and the battery cell assembly 100 may be configured by adhering the thermal insulating plate 20 and the longitudinal unit cells 110. The battery cell assembly 100 may be seated in the module case by further applying the adhesive T to the outer side surface of the battery cell assembly 100 facing the module case 300. In this case, the electric insulating sheet 30 may be located between the battery cell assembly 100 and the module case 300.

In particular, as shown in FIG. 14, a thermally conductive resin layer R may be filled or applied in at least one of a space between the module case 300 covering an upper portion of the battery cell assembly 100 and the battery cell assembly 100 and a space between the battery cell assembly 100 and the module case 300 located below the battery cell assembly 100.

Referring to FIGS. 2 and 14, the space between the module case 300 covering the upper portion of the battery cell assembly 100 and the battery cell assembly 100 is a space surrounded by the upper case 310a and an upper portion of the side plate case 310b of the right case 310 of FIG. 2, an upper end portion of the left case 320, and the battery cell assembly 100.

The space between the module case 300 located below the battery cell assembly 100 and the battery cell assembly 100 is a space surrounded by the lower case 310a' and a lower portion of the side plate case 310b of the right case 310 of FIG. 2, a lower end portion of the left case 320, and the battery cell assembly 100.

The thermally conductive resin layer R may use a silicon-based resin, a modified silicone resin, an acrylic resin, or the like. When the thermally conductive resin layer R is filled between the battery cell assembly 100 and the module case, the battery cell assembly 100 can be fixed without moving in the module case 300. In addition, since the resin layer is a so-called thermal resin having thermal conductivity, the resin layer can efficiently absorb heat generated inside the battery module 1000. In addition, the thermally conductive resin layer R can further improve heat dissipation efficiency by transferring heat to a cooling plate (not shown) installed on the upper portion of the battery module.

As described above, the battery cell assembly 100 is seated in the module case 300, and the battery cell assembly 100 is fixed by the adhesive T and the thermally conductive resin layer R, thereby forming the expandable battery module 1000 in the form of FIG. 14.

FIG. 15 is a schematic view illustrating an installation position of the thermally conductive resin layer R of the present invention. The thermally conductive resin layer R may be filled between the upper case or the lower case and the battery cell assembly 100 in the longitudinal direction of the module case 300. However, as shown in FIG. 15, the thermally conductive resin layer R may be formed only in a portion that receives a lot of stress or only in a portion in which a lot of heat is generated. That is, a portion indicated by a dotted line box of FIG. 15 is a structure in which the electrode leads of the battery cells 10 in the longitudinal direction protrude or are electrically connected to each other and thus a large amount of heat is generated. Accordingly, when the thermally conductive resin layer R is formed in the portion in the form of a block having a predetermined width, such as a resin block, a use amount of the thermally conductive resin layer R can be reduced. In addition, as shown in FIG. 15, the portion of the dotted line box includes a front end, an intermediate end, and a rear end of the module case 300, and is a portion that is structurally stressed, and thus when these three places are adhesively fixed, the separation of the module case 300 or the movement of the battery cell assembly 100 can be effectively prevent.

The above description is only an example describing the technical spirit of the present invention, and it will be understood by those of skilled in the art that various changes in form and details may be made without departing from the spirit and scope of the present invention. In FIG. 2, the module case 300 is configured with the C-shaped right case 310 and the I-shaped left case 320, but, for example, the module case 300 surrounding the battery cell assembly 100 may be configured by bonding C-shaped left and right cases, in each of which left and right shapes are the same, or C-shaped upper and lower cases, in each of which upper and lower shapes each of which are the same. In addition, in FIG. 14, the thermally conductive resin layer R is filled in both the upper and lower portions of the module case 300, but the thermally conductive resin layer R may be filled in only one of the upper and lower portions as necessary.

FIG. 16 is a schematic view of a battery pack 2000 including a battery module stack 1000' composed of the battery module 1000 of the present invention.

As described above, the battery module 1000 of the present invention includes the battery cell assembly 100 in which the battery cell 10 is used as the longitudinal unit cell 110 and stacked in the thickness direction of the battery cell by a predetermined number, and the module case 300 extending long in the longitudinal direction to correspond thereto. Accordingly, a form in which the battery module 1000 is easily connected in the longitudinal direction or the thickness direction, such as a Lego block, is obtained. As shown in FIG. 16, a plurality of expandable battery modules 1000 may be stacked in the longitudinal direction and thickness direction of the battery cell 10 in one battery pack case 2100 to configure a battery module stack 1000'. The stacking direction (shape) of the expandable battery modules 1000 may be changed so as to correspond to the shape of the battery pack case 2100 to be applied in addition to that shown in FIG. 16. In this respect, it can say that the expandable battery module 1000 of the present invention has an extremely high degree of freedom in design. In particular, as described above, in the battery module 1000 of the present invention, venting paths are formed in three places of the front and rear ends of the module and the hollow center guard at the central portion of the module. Accordingly, when a venting passage communicating with the venting paths is formed in the battery pack case 2100, gas inside the battery pack can also be easily removed.

The scope of the present invention should be construed by the appended claims.

Meanwhile, in the present specification, terms indicating directions such as "up," "down," "left,", "right," "front," and "rear" are used, but these terms are only for convenience of description, and it will be obvious to those skilled in the art that these terms may vary depending on positions of an object, positions of an observer, or the like.

### [Description of Reference Numerals]

10: battery cell
11 and 11': leads
20: thermal insulating plate
30: electric insulating sheet
100: battery cell assembly
110: longitudinal unit cell
200: hollow center guard
210: hollow
210a: partition wall
211: first venting hole
250: second center guard
251: cut-out slit
300: module case
310: right case
310a: upper case
310a': lower case
310b: side plate case
311: recessed portion
312: second venting hole
320: left case
400: end plate
410 and 410': front end plates
411: electric insulating sheet
412: terminal bus bar
413 and 413': third venting holes
414: fourth venting hole
415: fixed coupling portion
420 and 420': rear end plates
421: electric insulating sheet
423 and 423': third venting holes
424: fourth venting hole
425: fixed coupling portion
R: thermally conductive resin layer
T: adhesive
1000: battery module
1000': battery module stack
2100: battery pack case
2000: battery pack

## Claims

1. A battery module (1000) comprising:
a battery cell assembly (100) in which two or more columns of longitudinal unit cells (110), each of which is composed of two or more battery cells (10) arranged in a line in a longitudinal direction and connected, are stacked in a thickness direction of the battery cell (10);
a hollow center guard (200) disposed at a connection position of end portions of the battery cells (10), which face each other in the longitudinal direction, in the longitudinal unit cell (110); and
a module case (300) in which the battery cell assembly (100) and the hollow center guard (200) are accommodated,
wherein a first venting hole (211) communicating with a hollow (210) of the hollow center guard (200) is provided in a sidewall of the hollow center guard (200), and
a second venting hole (312) communicating with the hollow (210) of the hollow center guard (200) is provided in the module case (200) configured to cover an upper portion of the hollow center guard (200).

2. The battery module of claim 1, wherein the battery cells (10) of the longitudinal unit cell (110) are connected by welding electrode leads (11, 11') of the end portions of the battery cells (10), which face each other in the longitudinal direction.

3. The battery module of claim 2, wherein
an electrode lead (11) of a battery cell, which is located at one end portion of the battery cell assembly (100) in the longitudinal direction, is electrically connected to a terminal bus bar (412), and
an electrode lead (11') of a battery cell, which is located at the other end portion of the battery cell assembly (100) in the longitudinal direction, is electrically connected to an electrode lead (11) of an adjacent battery cell (10) of the battery cell assembly (100) in the thickness direction of the battery cell (10).

4. The battery module of claim 1, wherein the battery cell assembly (100) has a 1P4S electrical connection structure in which the longitudinal unit cells (110) each having two battery cells (10) connected in the longitudinal direction are stacked in two columns.

5. The battery module of claim 1, wherein one or more thermal insulating plates (20) are installed between the longitudinal unit cells (110) adjacent to each other in the thickness direction of the battery cell (10).

6. The battery module of claim 1, wherein the hollow center guard (200) is disposed between battery cell connection portions, each of which is a portion at which the battery cells (10) are connected in the longitudinal direction, of two longitudinal unit cells (110) adjacent to each other in the thickness direction of the battery cell (10).

7. The battery module of claim 1, wherein the hollow center guard (200) has a rod shape extending a predetermined length in a height direction of the battery cell (10) between an upper module case (310a) and a lower module case (310'), and
the first venting hole (211) is disposed in each of both sidewalls of a lower side of the hollow center guard (200).

8. The battery module of claim 7, wherein a portion of the module case (300), in which the second venting hole (312) is provided, is concavely recessed downward and covers the upper portion of the hollow center guard (200).

9. The battery module of claim 1, wherein
a partition wall (W) extending perpendicular to the longitudinal direction of the battery cell is disposed in the hollow (210) of the hollow center guard (200), and
the hollow (210) is divided into two hollows (210) by the partition wall (W).

10. The battery module of claim 1, wherein
a second center guard (250) is installed on each of both side surfaces of the hollow center guard (200) in the thickness direction of the battery cell (10), and
the battery cells (10) of the longitudinal unit cell (110) are connected in the longitudinal direction through the second center guard (250).

11. The battery module of claim 10, wherein
the second center guard (250) includes a through slot or a cut-out slit (251) extending downward from an upper end portion thereof, and
the battery cells (10) of the longitudinal unit cell (110) are connected through the through slot or the cut-out slit (251).

12. The battery module of claim 1, further comprising end plates (400) configured to cover a front end portion and a rear end portion of the battery cell assembly (100) and coupled to a front end portion and a rear end portion of the module case (300) in the longitudinal direction, respectively.

13. The battery module of claim 12, wherein a third venting hole (413, 413') communicating with the outside is provided in each of the end plates (400).

14. The battery module of claim 12, wherein
a terminal bus bar (412) is installed on a front end plate (410, 410'), which covers the front end portion of the battery cell assembly (100), of the end plates (400), and
an electrode lead (11, 11') of the battery cell (10) provided at a front end of the battery cell assembly (100) is coupled to the terminal bus bar (412).

15. The battery module of claim 12, wherein
each of the end plates (400) includes an inner space therein,
a third venting hole (413, 413') communicating with the space is provided in an inner side surface of the end plate (400), which faces the battery cell assembly (100), and
a fourth venting hole (414) communicating with the inner space and the outside is provided in a lower surface of the end plate (400).

16. The battery module of claim 15, wherein
a partition wall (W) extending to a portion of a height of the end plate (400) is installed in the inner space of the end plate (400), and
a gas introduced into the third venting hole (413, 413') moves over the partition wall (W) and is discharged through the fourth venting hole (414).

17. The battery module of claim 15, wherein
a terminal bus bar (412) is installed on an outer side surface of a front end plate (410, 410'), which covers the front end portion of the battery cell assembly (100), of the end plates (400),
a through slot (416) is provided in a body portion of the front end plate (410, 410') surrounding a space inside the front end plate (410, 410'), and
an electrode lead (11, 11') of the battery cell (10) provided at a front end of the battery cell assembly (100) passes through the through slot (416) and is coupled to the terminal bus bar (412).

18. The battery module of claim 15, wherein a fixed coupling portion (415), which is coupled to a battery pack (2000), protrudes from a lower end portion of the end plate (400).

19. The battery module of claim 1, wherein a thermally conductive resin layer (R) is disposed in at least one of a space between the module case (300) covering an upper portion of the battery cell assembly (100) and the battery cell assembly (100), and a space between the battery cell assembly (100) and the module case (300) located below the battery cell assembly (100).

20. A battery pack (2000) comprising a battery module stack (1000') in which the battery module (1000) of any one of claims 1 to 19 is stacked in plural in at least one of the longitudinal direction and the thickness direction of the battery cell (10).

## Patentansprüche

1. Batteriemodul (1000) aufweisend:
eine Batteriezellenanordnung (100), in der zwei oder mehr Reihen von Längseinheitszellen (110), die sich jeweils aus zwei oder mehr Batteriezellen (10) zusammensetzen und in einer Linie in einer Längsrichtung angeordnet und verbunden sind, in einer Dickenrichtung der Batteriezelle (10) gestapelt sind;
einen hohlen Mittenschutz (200), der an einer Verbindungsposition von Endabschnitten der Batteriezellen (10), die einander in der Längsrichtung zugewandt sind, in der Längseinheitszelle (110) angeordnet ist; und
ein Modulgehäuse (300), in dem die Batteriezellenanordnung (100) und der hohle Mittenschutz (200) aufgenommen sind,
wobei ein erstes Entlüftungsloch (211), das mit einem Hohlraum (210) des hohlen Mittenschutzes (200) in offener Verbindung steht, in einer Seitenwand des hohlen Mittenschutzes (200) bereitgestellt ist, und
ein zweites Entlüftungsloch (312), das mit dem Hohlraum (210) des hohlen Mittenschutzes (200) in offener Verbindung steht, in dem Modulgehäuse (200) bereitgestellt ist, das konfiguriert ist, einen oberen Abschnitt des hohlen Mittenschutzes (200) zu bedecken.

2. Batteriemodul nach Anspruch 1, wobei die Batteriezellen (10) der Längseinheitszelle (110) durch Schweißelektrodenleitungen (11, 11') der Endabschnitte der Batteriezellen (10), die einander in der Längsrichtung zugewandt sind, miteinander verbunden sind.

3. Batteriemodul nach Anspruch 2, wobei
eine Elektrodenleitung (11) einer Batteriezelle, die sich an einem Endabschnitt der Batteriezellenanordnung (100) in der Längsrichtung befindet, elektrisch mit einer Anschlusssammelschiene (412) verbunden ist, und
eine Elektrodenleitung (11') einer Batteriezelle, die sich an dem anderen Endabschnitt der Batteriezellenanordnung (100) in der Längsrichtung befindet, elektrisch mit einer Elektrodenleitung (11) einer benachbarten Batteriezelle (10) der Batteriezellenanordnung (100) in der Dickenrichtung der Batteriezelle (10) verbunden ist.

4. Batteriemodul nach Anspruch 1, wobei die Batteriezellenanordnung (100) eine elektrische 1P4S-Verbindungsstruktur aufweist, in der die Längseinheitszellen (110), die jeweils zwei Batteriezellen (10) aufweisen, die in der Längsrichtung verbunden sind, in zwei Reihen gestapelt sind.

5. Batteriemodul nach Anspruch 1, wobei eine oder mehrere wärmeisolierende Platten (20) zwischen den Längseinheitszellen (110), die einander in der Dickenrichtung der Batteriezelle (10) benachbart sind, installiert sind.

6. Batteriemodul nach Anspruch 1, wobei der hohle Mittenschutz (200) zwischen Batteriezellenverbindungsabschnitten, von denen jeder ein Abschnitt ist, an dem die Batteriezellen (10) in der Längsrichtung verbunden sind, von zwei Längseinheitszellen (110), die einander in der Dickenrichtung der Batteriezelle (10) benachbart sind, angeordnet ist.

7. Batteriemodul nach Anspruch 1, wobei der hohle Mittenschutz (200) eine Stabform aufweist, die sich eine vorbestimmte Länge in einer Höhenrichtung der Batteriezelle (10) zwischen einem oberen Modulgehäuse (310a) und einem unteren Modulgehäuse (310') erstreckt, und
das erste Entlüftungsloch (211) in jeder von beiden Seitenwänden einer unteren Seite des hohlen Mittenschutzes (200) angeordnet ist.

8. Batteriemodul nach Anspruch 7, wobei ein Abschnitt des Modulgehäuses (300), in dem das zweite Entlüftungsloch (312) bereitgestellt ist, konkav nach unten vertieft ist und den oberen Abschnitt des hohlen Mittenschutzes (200) bedeckt.

9. Batteriemodul nach Anspruch 1, wobei
eine Trennwand (W), die sich senkrecht zu der Längsrichtung der Batteriezelle erstreckt, in dem Hohlraum (210) des hohlen Mittenschutzes (200) angeordnet ist, und
der Hohlraum (210) durch die Trennwand (W) in zwei Hohlräume (210) unterteilt ist.

10. Batteriemodul nach Anspruch 1, wobei
ein zweiter Mittenschutz (250) an jeder von beiden Seitenflächen des hohlen Mittenschutzes (200) in der Dickenrichtung der Batteriezelle (10) installiert ist, und
die Batteriezellen (10) der Längseinheitszelle (110) in der Längsrichtung durch den zweiten Mittenschutz (250) verbunden sind.

11. Batteriemodul nach Anspruch 10, wobei
der zweite Mittenschutz (250) einen Durchgangsschlitz oder einen ausgeschnittenen Schlitz (251) beinhaltet, der sich von einem oberen Endabschnitt davon nach unten erstreckt, und
die Batteriezellen (10) der Längseinheitszelle (110) durch den Durchgangsschlitz oder den ausgeschnittenen Schlitz (251) verbunden sind.

12. Batteriemodul nach Anspruch 1, ferner aufweisend Endplatten (400), die konfiguriert sind, einen vorderen Endabschnitt und einen hinteren Endabschnitt der Batteriezellenanordnung (100) zu bedecken, und jeweils mit einem vorderen Endabschnitt und einem hinteren Endabschnitt des Modulgehäuses (300) in der Längsrichtung gekoppelt sind.

13. Batteriemodul nach Anspruch 12, wobei ein drittes Entlüftungsloch (413, 413'), das mit der Außenseite in offener Verbindung steht, in jeder der Endplatten (400) bereitgestellt ist.

14. Batteriemodul nach Anspruch 12, wobei
eine Anschlusssammelschiene (412) an einer vorderen Endplatte (410, 410') der Endplatten (400) installiert ist, die den vorderen Endabschnitt der Batteriezellenanordnung (100) bedeckt, und
eine Elektrodenleitung (11, 11') der Batteriezelle (10), die an einem vorderen Ende der Batteriezellenanordnung (100) bereitgestellt ist, mit der Anschlusssammelschiene (412) gekoppelt ist.

15. Batteriemodul nach Anspruch 12, wobei
jede der Endplatten (400) einen Innenraum darin umfasst,
ein drittes Entlüftungsloch (413, 413'), das mit dem Raum in offener Verbindung steht, in einer inneren Seitenfläche der Endplatte (400) bereitgestellt ist, die der Batteriezellenanordnung (100) zugewandt ist, und
ein viertes Entlüftungsloch (414), das mit dem Innenraum und der Außenseite in offener Verbindung steht, in einer unteren Fläche der Endplatte (400) bereitgestellt ist.

16. Batteriemodul nach Anspruch 15, wobei
eine Trennwand (W), die sich zu einem Abschnitt einer Höhe der Endplatte (400) erstreckt, in dem Innenraum der Endplatte (400) installiert ist, und
ein Gas, das in das dritte Entlüftungsloch (413, 413') eingeführt wird, über die Trennwand (W) strömt und durch das vierte Entlüftungsloch (414) abgegeben wird.

17. The battery module of claim 15, wherein
eine Anschlusssammelschiene (412) an einer äußeren Seitenfläche einer vorderen Endplatte (410, 410') der Endplatten (400) installiert ist, die den vorderen Endabschnitt der Batteriezellenanordnung (100) bedeckt,
ein Durchgangsschlitz (416) in einem Körperabschnitt der vorderen Endplatte (410, 410') bereitgestellt ist, der einen Raum innerhalb der vorderen Endplatte (410, 410') umgibt, und
eine Elektrodenleitung (11, 11') der Batteriezelle (10), die an einem vorderen Ende der Batteriezellenanordnung (100) bereitgestellt ist, durch den Durchgangsschlitz (416) verläuft und mit der Anschlusssammelschiene (412) gekoppelt ist.

18. Batteriemodul nach Anspruch 15, wobei ein fester Kopplungsabschnitt (415), der mit einem Batteriepack (2000) gekoppelt ist, von einem unteren Endabschnitt der Endplatte (400) vorsteht.

19. Batteriemodul nach Anspruch 1, wobei eine wärmeleitfähige Harzschicht (R) in mindestens einem von einem Raum zwischen dem Modulgehäuse (300), das einen oberen Abschnitt der Batteriezellenanordnung (100) bedeckt, und der Batteriezellenanordnung (100) und einem Raum zwischen der Batteriezellenanordnung (100) und dem Modulgehäuse (300), das sich unter der Batteriezellenanordnung (100) befindet, angeordnet ist.

20. Batteriepack (2000) aufweisend einen Batteriemodulstapel (1000'), in dem das Batteriemodul (1000) nach einem der Ansprüche 1 bis 19 mehrfach in mindestens einer von der Längsrichtung und der Dickenrichtung der Batteriezelle (10) gestapelt ist.

## Revendications

1. Module de batterie (1000) comprenant :
un ensemble de cellules de batterie (100) dans lequel deux colonnes de cellules unitaires longitudinales (110) ou plus, qui sont chacune composées de deux cellules de batterie (10) ou plus, agencées en ligne dans une direction longitudinale et connectées, sont empilées dans une direction de l'épaisseur de la cellule de batterie (10) ;
une protection centrale creuse (200) disposée à une position de connexion des parties d'extrémité des cellules de batterie (10), qui sont face l'une à l'autre dans la direction longitudinale, dans la cellule unitaire longitudinale (110) ; et
un boîtier de module (300) dans lequel l'ensemble de cellules de batterie (100) et la protection centrale creuse (200) sont reçus,
dans lequel un premier trou d'aération (211) communiquant avec un creux (210) de la protection centrale creuse (200) est fourni dans une paroi latérale de la protection centrale creuse (200), et
un deuxième trou d'aération (312) communiquant avec le creux (210) de la protection centrale creuse (200) est fourni dans le boîtier de module (200) configuré pour couvrir une partie supérieure de la protection centrale creuse (200).

2. Module de batterie selon la revendication 1, dans lequel les cellules de batterie (10) de la cellule unitaire longitudinale (110) sont connectées en soudant des câbles d'électrode (11, 11') des parties d'extrémité des cellules de batterie (10), qui sont en face l'une de l'autre dans la direction longitudinale.

3. Module de batterie selon la revendication 2, dans lequel
un câble d'électrode (11) d'une cellule de batterie, lequel est situé à une partie d'extrémité de l'ensemble de cellules de batterie (100) dans la direction longitudinale, est connecté électriquement à une barre omnibus de borne (412), et
un câble d'électrode (11') d'une cellule de batterie, lequel est situé à l'autre partie d'extrémité de l'ensemble de cellules de batterie (100) dans la direction longitudinale, est connecté électriquement à un câble d'électrode (11) d'une cellule de batterie adjacente (10) de l'ensemble de cellules de batterie (100) dans la direction de l'épaisseur de la cellule de batterie (10).

4. Module de batterie selon la revendication 1, dans lequel l'ensemble de cellules de batterie (100) a une structure de connexion électrique 1P4S dans lequel les cellules unitaires longitudinales (110) ayant chacune deux cellules de batterie (10) connectées dans la direction longitudinale sont empilées en deux colonnes.

5. Module de batterie selon la revendication 1, dans lequel une ou plusieurs plaques d'isolation thermique (20) sont installées entre les cellules unitaires longitudinales (110) adjacentes l'une à l'autre dans la direction de l'épaisseur de la cellule de batterie (10).

6. Module de batterie selon la revendication 1, dans lequel la protection centrale creuse (200) est disposée entre des parties de connexion de cellules de batterie, qui sont chacune une partie à laquelle les cellules de batterie (10) sont connectées dans la direction longitudinale, de deux cellules unitaires longitudinales (110) adjacentes l'une à l'autre dans la direction de l'épaisseur de la cellule de batterie (10).

7. Module de batterie selon la revendication 1, dans lequel la protection centrale creuse (200) a une forme de tige s'étendant sur une longueur prédéterminée dans une direction de la hauteur de la cellule de batterie (10) entre un boîtier de module supérieur (310a) et un boîtier de module inférieur (310'), et
le premier trou d'aération (211) est disposé dans chacune des deux parois latérales d'un côté inférieur de la protection centrale creuse (200).

8. Module de batterie selon la revendication 7, dans lequel une partie du boîtier de module (300), dans lequel le deuxième trou d'aération (312) est fourni, est renfoncé de manière concave vers le bas et couvre la partie supérieure de la protection centrale creuse (200).

9. Module de batterie selon la revendication 1, dans lequel
une paroi de séparation (W) s'étendant perpendiculairement à la direction longitudinale de la cellule de batterie est disposée dans le creux (210) de la protection centrale creuse (200), et
le creux (210) est divisé en deux creux (210) par la paroi de séparation (W).

10. Module de batterie selon la revendication 1, dans lequel
une deuxième protection centrale (250) est installée sur chacune des deux surfaces latérales de la protection centrale creuse (200) dans la direction de l'épaisseur de la cellule de batterie (10), et
les cellules de batterie (10) de la cellule unitaire longitudinale (110) sont connectées dans la direction longitudinale à travers la deuxième protection centrale (250).

11. Module de batterie selon la revendication 10, dans lequel
la deuxième protection centrale (250) inclut une fente traversante ou une fente découpée (251) s'étendant vers le bas depuis une partie d'extrémité supérieure de celle-ci, et
les cellules de batterie (10) de la cellule unitaire longitudinale (110) sont connectées à travers la fente traversante ou la fente découpée (251).

12. Module de batterie selon la revendication 1, comprenant en outre des plaques d'extrémité (400) configurées pour couvrir une partie d'extrémité avant et une partie d'extrémité arrière de l'ensemble de cellules de batterie (100) et couplées à une partie d'extrémité avant et une partie d'extrémité arrière du boîtier de module (300) dans la direction longitudinale, respectivement.

13. Module de batterie selon la revendication 12, dans lequel un troisième trou d'aération (413, 413') communiquant avec l'extérieur est fourni dans chacune des plaques d'extrémité (400).

14. Module de batterie selon la revendication 12, dans lequel
une barre omnibus de borne (412) est installée sur une plaque d'extrémité avant (410, 410'), laquelle couvre la partie d'extrémité avant de l'ensemble de cellules de batterie (100) des plaques d'extrémité (400), et
un câble d'électrode (11, 11') de la cellule de batterie (10) fourni à une extrémité avant de l'ensemble de cellules de batterie (100) est couplé à la barre omnibus de borne (412).

15. Module de batterie selon la revendication 12, dans lequel
les plaques d'extrémité (400) incluent chacune un espace intérieur dans celles-ci,
un troisième trou d'aération (413, 413') communiquant avec l'espace est fourni dans une surface latérale intérieure de la plaque d'extrémité (400), laquelle fait face à l'ensemble de cellules de batterie (100), et
un quatrième trou d'aération (414) communiquant avec l'espace intérieur et l'extérieur est fourni dans une surface inférieure de la plaque d'extrémité (400).

16. Module de batterie selon la revendication 15, dans lequel
une paroi de séparation (W) s'étendant à une partie d'une hauteur de la plaque d'extrémité (400) est installée dans l'espace intérieur de la plaque d'extrémité (400), et
un gaz introduit dans le troisième trou d'aération (413, 413') se déplace sur la paroi de séparation (W) et est déchargé à travers le quatrième trou d'aération (414).

17. Module de batterie selon la revendication 15, dans lequel
une barre omnibus de borne (412) est installée sur une surface latérale extérieure d'une plaque d'extrémité avant (410, 410'), laquelle couvre la partie d'extrémité avant de l'ensemble de cellules de batterie (100) des plaques d'extrémité (400),
une fente traversante (416) est fournie dans une partie de corps de la plaque d'extrémité avant (410, 410') entourant un espace intérieur de la plaque d'extrémité avant (410, 410'), et
un câble d'électrode (11, 11') de la cellule de batterie (10) fourni à une extrémité avant de l'ensemble de cellules de batterie (100) passe à travers la fente traversante (416) et est couplé à la barre omnibus de borne (412).

18. Module de batterie selon la revendication 15, dans lequel une partie de couplage fixe (415), laquelle est couplée à un bloc-batterie (2000), dépasse d'une partie d'extrémité inférieure de la plaque d'extrémité (400).

19. Module de batterie selon la revendication 1, dans lequel une couche de résine thermoconductrice (R) est disposée dans soit un espace entre le boîtier de module (300) couvrant une partie supérieure de l'ensemble de cellules de batterie (100) et l'ensemble de cellules de batterie (100), soit un espace entre l'ensemble de cellules de batterie (100) et le boîtier de module (300) situé sous l'ensemble de cellules de batterie (100).

20. Bloc-batterie (2000) comprenant un empilement de modules de batterie (1000') dans lequel une pluralité de modules de batterie (1000) selon l'une quelconque des revendications 1 à 19 sont empilés dans soit la direction longitudinale, soit la direction de l'épaisseur de la cellule de batterie (10).
